Europäisches Patentamt

European Patent Office

Office européen des brevets

(11) Numéro de publication: **0 408 432 A1**

## DEMANDE DE BREVET EUROPEEN

(21) Numéro de dépôt: 90401960.1

(51) Int. Cl.5: **B64C 1/00**

(22) Date de dépôt: 06.07.90

(30) Priorité: 12.07.89 FR 8909397

(43) Date de publication de la demande:
16.01.91 Bulletin 91/03

(84) Etats contractants désignés:
BE DE ES GB IT NL SE

(71) Demandeur: AIRBUS INDUSTRIE
1 Rond-Point Maurice Bellonte
F-31707 Blagnac(FR)

(72) Inventeur: **Roeder, Jean**
**38, Route de Bouconne**
**F-31700 Cornebarrieu(FR)**
Inventeur: **Geering, Leslie James**
**10, Chemin de Barberousse**
**F-31700 Cornebarrieu(FR)**

(74) Mandataire: **Bouju, André**
**Cabinet Bouju 38 avenue de la Grande**
**Armée**
**F-75017 Paris(FR)**

(54) Fuselage de grande capacité pour avion.

(57) Fuselage d'avion comportant deux lobes disposés côte à côte, assemblés selon deux lignes de jonctions longitudinales.

Selon l'invention, le fuselage comprend un poutrage supérieur de renforcement (28) de la ligne de jonction supérieur ; un plancher (23) séparant un volume supérieur utilisable comme cabine (24) et un volume inférieur (25) utilisable comme soute ; des moyens (32) pour supporter le plancher de cabine ces moyens reliant ledit plancher à la partie inférieure du fuselage des rangées de sièges s'étendant d'un côté à l'autre du corps bilobé ; un poutrage inférieur de renforcement (29) le long de la ligne d'intersection inférieure ; et des poteaux espacés (31), répartis dans les rangées de sièges, reliant le poutrage supérieur (28) à des éléments de structure situés dans la région inférieure du fuselage (32, 29).

Application à un avion à grande capacité pour permettre une circulation facile des passagers d'un lobe dans l'autre conformément aux règlements de sécurité aéronautique.

FIG_1A

## FUSELAGE DE GRANDE CAPACITÉ POUR AVION

La présente invention concerne un fuselage bilobé pour un aéronef, notamment un avion, destiné au transport de passagers et/ou de marchandises. Elle concerne plus particulièrement un fuselage bilobe pour un avion de transport de grande capacité.

L'invention vise également les avions équipés d'un tel fuselage.

D'une façon générale, la conception d'un fuselage d'avion doit satisfaire de nombreux critères. Ceux-ci donnent lieu à des compromis entre les exigences de caractère fonctionnel et les exigences de caractère structurel, de façon à aboutir à un poids acceptable et à un coût de fabrication minimal. Bien entendu, une telle conception doit également s'adapter aux exigences de la certification aéronautique et aux besoins du marché.

Un fuselage d'avion a normalement comme fonction de transporter une charge payante sous la forme de passagers et de bagages, ainsi que de fret. Pour la cabine, ceci implique une flexibilité pour l'agencement des sièges et des postes de service (offices, toilettes,.....) ainsi que des moyens d'accès et d'évacuation appropriés. Les compartiments prévus pour le fret sont habituellement chargés en y pénétrant par un côté seulement du fuselage ; ceci permet de réduire la durée d'escale, l'accès des passagers étant réalisé de l'autre côté du fuselage.

Pour réaliser des structures de poids acceptable, il faut tenir compte de la pressurisation de la cabine, qui assure une ambiance confortable au cours d'un vol à haute altitude, ainsi que de la charge globale, constituée par la résultante des forces engendrées par la mission de l'avion dans des conditions atmosphériques données. Pour la plus grande partie du fuselage, la pression intérieure à la cabine est la charge prédominante à prendre en compte pour le dimensionnement. A cet égard, la structure optimale est constituée par un tronçon de fuselage cylindrique de section sensiblement circulaire ou quasi-circulaire. La différence de pression régnant de part et d'autre de la coque se traduit par une contrainte périphérique, qui est contrebalancée par des longerons longitudinaux ainsi que par des structures transversales, appelées cadres, et des cloisons résistant à la pression.

Les coûts de fabrication peuvent être réduits de façon importante par l'utilisation de pièces existant déjà sur d'autres types d'avions réalisés. D'une façon analogue, on a intérêt à développer des appareils ayant des sous-ensembles identiques ou des sous-ensembles comprenant de nombreuses pièces communes, car les coûts initiaux de l'outillage de fabrication peuvent alors être amortis sur une plus grande série. De plus, l'utilisation accrue de l'automatisation peut devenir justifiée par suite de la réduction supplémentaire des coûts qu'elle entraîne.

En matière aéronautique, les besoins du marché vont dans le sens de l'augmentation du nombre de passagers transportables par un seul avion, lequel doit cependant conserver des dimensions extérieures acceptables. Cette tendance vise à limiter l'encombrement des aéroports et du trafic aérien en réduisant le nombre des vols, et d'autre part à obtenir un coût direct de fonctionnement par passager (DOC) qui soit le plus bas possible. Habituellement, le coût précité inclut un pourcentage du prix d'achat initial,le coût du carburant, les frais de personnel (équipage) et de maintenance. Dans ces conditions, l'addition de sièges supplémentaires, si elle est réalisée pour un coût limité,peut améliorer notablement le coût direct de fonctionnement par siège. De même, un grand volume de soute utilisable efficacement pour du fret ou pour d'autres fonctions peut contribuer d'une façon notable à l'amélioration du coût d'exploitation, par les possibilités de revenus supplémentaires qu'il offre.

En vue d'accroître le volume du fuselage utilisable, sans trop augmenter les dimensions extérieures de l'avion, différentes sections transversales ont été étudiées. Des fuselages bilobés verticaux, c'est-à-dire comprenant deux lobes longitudinaux superposés, accolés suivant un plan horizontal, ont déjà été réalisés et exploités.

Cependant cette formule, si elle est relativement compacte, présente des inconvénients concernant l'utilisastion volumétrique du fuselage et elle complique l'accès des passagers au pont supérieur, compte tenu des installations aéroportuaires existantes. Ceci nécessite la mise en place d'escaliers intérieurs ce qui diminue la place disponible et réduit l'efficacité structurelle de l'avion.

On a également proposé un avion à fuselage bilobé dans le sens latéral ou horizontal, c'est-à-dire comprenant deux lobes longitudinaux accolés sensiblement suivant un plan vertical longitudinal. C'est en particulier le cas des US 3 405 893 (C. FLAMAND et al) et 4 674 712 (WHITENER) qui décrivent un avion à fuselage bilobé, chaque lobe étant limité par une paroi longitudinale plane le long de son intersection avec l'autre lobe. Cette paroi séparatrice, qui est ainsi verticale en position d'assiette de l'avion, constitue un plan commun vertical de liaison. De plus, une enveloppe extérieure, de section ovale, entoure les deux lobes, cette enveloppe étant constituée d'un métal résistant et étant étanche à l'air. Dans la partie supérieure réservée aux passagers, quelques ouvertures limitées en nombre sont prévues pour le passage d'un lobe à l'autre.

Cet avion à fuselage bilobé constitue un progrès plutôt faible par rapport aux avions classiques, pour les raisons suivantes :

- la présence d'une enveloppe ovale en métal résistant et d'une paroi centrale sur la majeure partie de la longueur de l'avion, fait que le devis de masse n'est pas amélioré ou l'est très peu ;

- la paroi centrale, qui est presque continue, augmente la masse de l'avion et constitue un obstacle important à la circulation des passagers d'un côté à l'autre de l'appareil. Ceci est un inconvénient très sérieux du point de vue de la sécurité des passagers en cas d'incident ou d'accident. Le service à bord est également désavantagé de ce fait ainsi que les conditions de chargement du fret, les deux côtés du fuselage devant en pratique être utilisés dans ce cas pour l'accès des passagers.

La présente invention concerne une conception différente de fuselage d'avion dont la majeure partie comprend un corps bilobé dans le sens latéral. L'invention vise en effet à réaliser un fuselage au moyen de composants existants, ce fuselage présentant une augmentation de masse relativement faible par rapport à l'augmentation du nombre de sièges du pont supérieur, et/ou à l'accroissement de fret ainsi qu'une flexibilité accrue de la répartition des sièges.

L'invention vise également un fuselage d'avion à grande capacité dans lequel la circulation d'un bord à l'autre de l'appareil est largement facilitée, afin de répondre aux règlements de sécurité en matière aéronautique et de permettre l'accès des passagers par un seul côté du fuselage.

La présente invention a ainsi pour objet un fuselage d'avion, dont la majeure partie est constituée par une coque bilobée dans le sens latéral, c'est-à-dire comportant deux lobes disposés côte à côte et formant deux lignes de jonction longitudinales, respectivement supérieure et inférieure, et ce fuselage est caractérisé en ce qu'il comprend :

- un poutrage supérieur de renforcement le long de ladite ligne de jonction supérieure ;

- un plancher séparant un volume supérieur utilisable comme cabine et un volume inférieur à usage multiple, notamment de soute pour le fret ;

- des moyens pour supporter le plancher de cabine, agencés entre ce dernier et la partie inférieure dudit fuselage ;

- des rangées de sièges agencées dans le volume de cabine et pouvant s'étendre sensiblement d'un côté à l'autre du corps bilobé ;

- un poutrage inférieur de renforcement le long de ladite ligne de jonction inférieure ;

- et des moyens de liaison espacés, répartis dans lesdites rangées de sièges reliant le poutrage supérieur à un élément d'infrastructure du fuselage.

La disposition des poutrages le long des lignes de jonction des deux lobes confère au fuselage la résistance nécessaire à la pression interne et aux efforts dynamiques pour permettre de supprimer la paroi médiane au moins dans la majeure partie du volume supérieur et de la remplacer par une succession de poteaux de liaison qui dégagent presque entièrement le volume intérieur bilobe et offrent toute facilité de déplacement transversal à l'intérieur de la double cabine.

Selon une réalisation préférée de l'invention, la section transversale du corps bilobé comprend deux courbes sécantes ayant chacune un contour sensiblement circulaire de même rayon. La distance des centres des deux lobes accolés peut varier dans des limites appréciables, la portance étant d'autant meilleure que ces centres sont plus éloignés. Toutefois la limite d'éloignement est donnée par la nécessité de conserver un passage praticable entre les deux lobes, compte tenu aussi de la hauteur du plancher de la cabine par rapport au plan des axes des lobes. Dans ces conditions, il est avantageux que la largeur d'une section transversale du corps bilobé soit sensiblement comprise entre 1,5 et 1,8 D ou D désigne le diamètre de chaque lobe.

Selon un mode de réalisation préféré de l'invention , le fuselage comporte, sur une partie au moins de sa longueur :

- un poutrage supérieur de renforcement disposé au-dessus de la ligne de jonction supérieure de la coque bilobe ;

- une série de poteaux espacés, répartis dans le plan longitudinal médian et reliant le poutrage précité au plancher de cabine ;

- une membrure supportant ce plancher de cabine et le reliant au poutrage inférieur de renforcement, au voisinage de la ligne de jonction inférieure des deux lobes de la coque.

Selon un autre mode de réalisation permettant une libre circulation transversale pour le fret au-dessous du plancher de cabine, le poutrage inférieur de renforcement, au moins en regard d'une ouverture de chargement des conteneurs est entièrement disposé au-dessous de la ligne de jonction inférieure de la coque et au-dessous du plancher de soute et les moyens de liaison espacés, tels que des poteaux, sont ménagés entre le poutrage supérieur et le poutrage inférieur avec assujettissement intermédiaire au plancher de cabine.

Les deux réalisations qui précèdent peuvent d'ailleurs être associées entre elles sur la longueur du fuselage.

De préférence les lignes de jonction supérieure et inférieure de la coque sont coiffées par un carénage rapporté non soumis à pressurisation et permettant d'améliorer les qualités aérodynamiques de l'avion.

La structure de fuselage prévue par l'invention offre, comme on le verra, une très grande flexibilité d'aménagement selon la demande, et limite le coût de fabrication tout en offrant de grandes facilités d'exploitation.

D'autres particularités et avantages de l'invention apparaîtront dans la description d'exemples non limitatifs de réalisation en référence aux dessins annexés dans lesquels :

- la figure 1 est une vue d'ensemble en perspective avec coupe transversale d'un exemple d'avion comprenant un fuselage conforme à l'invention, dans lequel le pont supérieur est destiné aux passagers et le pont inférieur au fret ;

- la figure 1A est une vue agrandie de la coupe de la figure 1 avec arrachement partiel du plancher ;

- les figures 2A et 2B sont des coupes transversales d'une réalisation schématique du fuselage selon IIA-IIA et IIB-IIB de la figure 3 ;

- la figure 3 est une coupe schématique longitudinale partielle selon III-III de la figure 2A montrant un mode de réalisation d'une membrure longitudinale médiane située entre le plancher de cabine et le poutrage inférieur de renforcement ;

- la figure 4 est une vue en coupe schématique montrant comment construire un fuselage bilobe à partir de deux fuselages identiques ;

- la figure 4A est un schéma explicatif simplifié d'après la figure 4 ;

- la figure 5 est une vue en coupe longitudinale partielle analogue à la figure 3, montrant une réalisation particulière détaillée des ossatures du fuselage bilobe de la figure 1 notamment dans la région de l'ouverture prévue en soute pour le passage des conteneurs ;

- les figures 6, 7, 7A, 8 et 9 sont des sections à plus grande échelle respectivement selon les plans VI-VI, VII-VII, VIIA-VIIA, VIII-VIII et IX-IX de la figure 5 ;

- la figure 10 montre à plus grande échelle une section de la poutre supérieure dans la zone où se trouve une passerelle de service ;

- la figure 11 est une vue schématique en perspective de la transition longitudinale entre le corps bilobe et la partie arrière du fuselage de la figure 1 ;

- la figure 12 est une coupe transversale selon XII-XII de la figure 11 dans la région de la ligne de jonction de la coque ;

- la figure 13 est une vue schématique de dessus à échelle réduite de la zone de transition de la figure 11 ;

- la figure 14 est une section selon XIV-XIV de la figure 13 ;

- la figure 15 est une vue en élévation d'un mode de réalisation d'une cloison de pressurisation ;

- la figure 15A est une vue agrandie du détail A de la figure 15 ;

- la figure 16 est une vue schématique en coupe selon XVI-XVI de la cloison de la figure 15 ;

- la figure 17 est une vue de la cloison précitée du côté opposé à celui représenté sur la figure 15 montrant les différents panneaux qui la constituent ;

- les figures 18 A, B, C sont des vues en coupe partielle selon XVIII-XVIII A, B, et C respectivement de la figure 17 ;

- la figure 19 est une vue en perspective avec arrachement de la partie de la voilure située dans le fuselage de la figure 1 ;

- la figure 20 est un diagramme relatif à la possibilité de circulation d'un bord à l'autre du fuselage entre deux rangées consécutives de sièges ;

- les figures 21, 22, et 23 sont des vues schématiques de trois agencements possibles de sièges ;

- la figure 24 est une vue schématique partielle en plan d'un fuselage bilobe conforme à l'invention présentant simultanément plusieurs agencements de siège ;

- la figure 25 est une coupe transversale à échelle agrandie du poutrage supérieur de la figure 5 montrant un mode de réalisation du drainage de l'eau dans la zone de jonction des deux lobes ;

- la figure 26 est une vue schématique partielle en plan du corps bilobe de l'avion de la figure 1, montrant les principales structures servant à supporter la charge emportée par l'avion ;

- la figure 27 est une vue schématique partielle en plan analogue à la figure 26 montrant l'emplacement des portes d'accès pour le fret ;

- la figure 28 est une vue en perspective d'une poutre transversale de support du plancher de cabine ;

- la figure 29 est un diagramme simplifié des forces s'exerçant sur le poutrage supérieur.

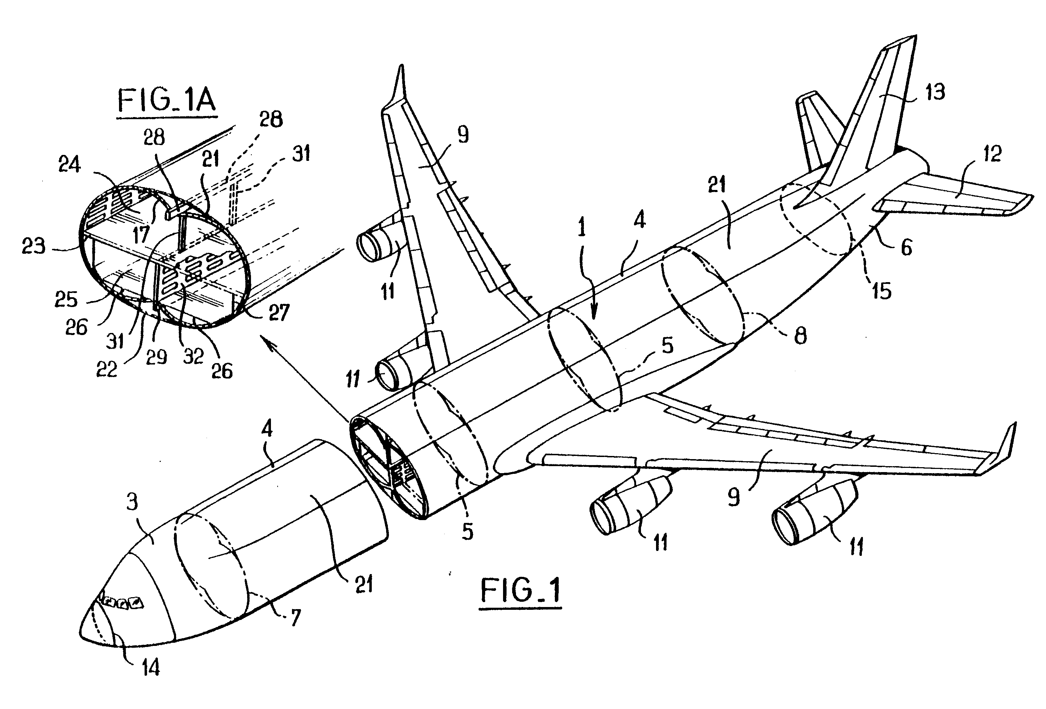

En se reportant aux figures 1 et 1A des dessins annexés, on voit un avion de grande capacité muni d'un fuselage bilobe 1 conforme à l'invention, comportant, d'avant en arrière le nez 3, le tronçon central bilobe 4 et une queue 6, ces trois parties étant raccordées les unes aux autres au niveau d'armatures transversales, ou cadres respectivement 7 à l'avant et 8 à l'arrière. D'autres armatures intermédiaires ont été schématisées en 5.

Le nez 3 comprend notamment le poste de pilotage et les systèmes de commande de l'avion. Le tronçon central 4 porte une voilure 9 supportant elle-même des moteurs de propulsion 11.

La queue 6 porte notamment un empennage horizontal 12 et un empennage vertical 13.

La partie habitable du fuselage est limitée par une cloison de pressurisation avant 14 et une cloison de pressurisation arrière 15 pour le confort des passagers au cours d'un vol en altitude.

Sur la coupe de la figure 1A opérée dans le tronçon central 4 légèrement tourné par rapport à la figure 1 afin de mieux faire apparaître la disposition interne du fuselage bilobe 1, on voit les principaux éléments de structure constitutifs de ce fuselage.

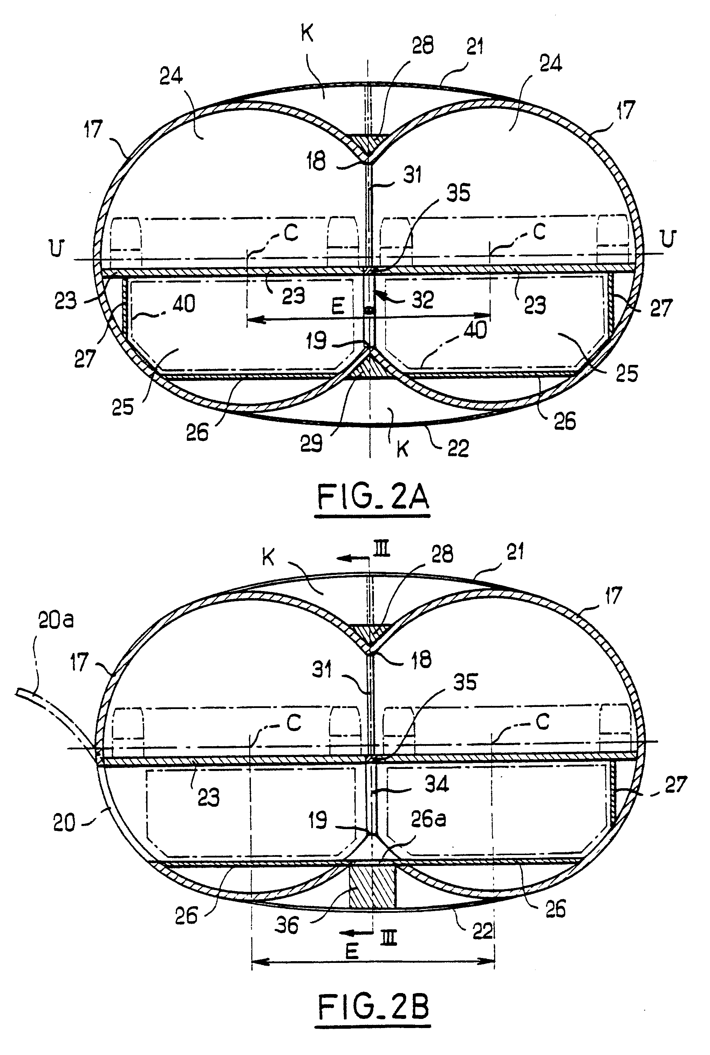

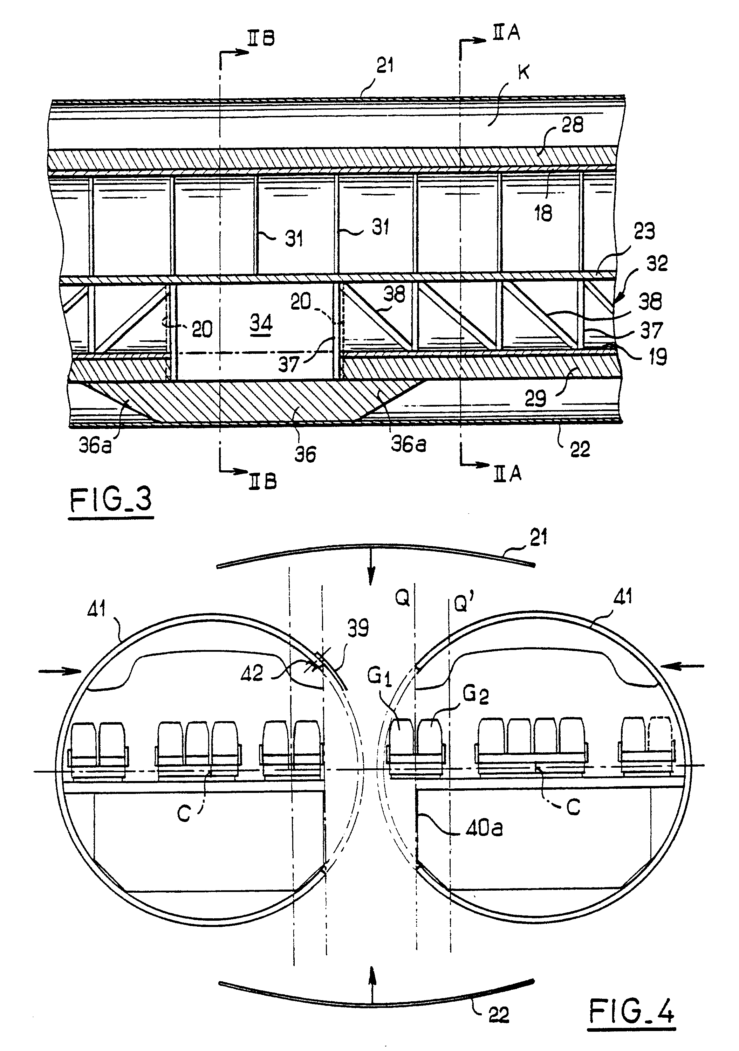

En particulier, le tronçon 4 comprend une coque bilobée 17 constitué par la jonction de deux lobes formés par deux éléments de coques de fuselage semblables de sections sensiblement circulaires disposés côte à côte et se rejoignant selon un plan médian longitudinal de l'avion, le long de deux lignes de jonction supérieure 18 et inférieure 19 (voir aussi les figures 2A, 2B et 3). Ces lignes sont, dans une version préférée de l'invention, coiffées par des carénages rapportés, respectivement supérieur 21 et inférieur 22 destinés à améliorer les qualités aérodynamiques de l'avion et à permettre un écoulement régulier du flux d'air.

Le fuselage bilobe est divisé en deux volumes superposés par un plancher 23 disposé au voisinage du plan horizontal médian U-U joignant les axes C-C des deux lobes de la coque 17 (figure 2A). Dans l'exemple des figures précitées,le plancher 23 est disposé au-dessous du plan U-U. Le plancher 23 sépare le volume supérieur 24 formant cabine pour les passagers et un volume inférieur 25 à usage de soute pour les bagages et le fret.

Le volume 25 est limité vers le bas par un plancher 26, et latéralement par des parois 27 de façon à correspondre aux dimensions des conteneurs 40 normalisés en aéronautique.

Les volumes 24 et 25 seront respectivement désignés ci-après par cabine et soute, le plancher 23 étant le plancher de cabine et 26 le plancher de soute.

Le plancher de cabine 23 a été représenté partiellement arraché sur la figure 1A afin de mieux montrer la structure longitudinale médiane du fuselage bilobe. Celle-ci comprend deux poutrages de renforcement 28 et 29, respectivement supérieur et inférieur, disposés le long des lignes de jonction supérieure et inférieure des deux lobes de la coque 17.

Les poutrages 28 et 29 sont reliés par l'intermédiaire de plusieurs éléments de structure associés, capables de travailler en compression et en extension, ces éléments étant disposés dans le plan vertical médian du fuselage et comprenant une succession de poteaux espacés 31 s'étendant sur toute la longueur du tronçon 4 entre le poutrage supérieur 28 et le plancher 23. Entre ce dernier et le poutrage inférieur 29 est d'autre part montée une membrure à claire-voie 32 supportant le plancher 23 dans sa partie médiane.

La membrure 32 s'étend sur la plus grande partie du tronçon 4 mais non sur sa totalité comme on le verra.

Les éléments de structure précités (17, 28, 29, 31 et 32) peuvent recevoir de nombreuses formes d'exécution en mettant à profit les technologies couramment utilisées en construction aéronautique et pour cette raison les structures n'ont pas été détaillées sur les figures 2A, 2B et 3.

Ainsi, la coque 17 peut être constituée par une structure conventionnelle formée d'un assemblage longitudinal de sections annulaires ou arceaux en nid d'abeilles, à l'extérieur desquels est enroulée une paroi métallique continue, l'ensemble étant conforme à la structure d'un avion à fuselage monolobe mais étant coupé à hauteur des lignes d'intersection 18 et 19 prévues pour la jonction d'un lobe avec le lobe adjacent.

Les poutrages 28 et 29 sont prévus pour assurer la jonction des bords des deux lobes.

La membrure de liaison 32 entre le plancher 23 et la poutre 29 peut être distincte de cette dernière et fixée à celle-ci ou faire corps avec elle. Cette membrure peut notamment être constituée par une poutre ajourée à treillis comme montré figure 3 et comportant un ensemble de montants 37, de préférence - mais non nécessairement -situés dans le prolongement des poteaux 31 et de contreforts diagonaux 38.

La membrure 32 peut aussi être constituée différemment par exemple au moyen d'une poutre à croisillons comme on le verra plus loin.

Dans tous les cas, les éléments de structure associés 17, 28, 29, 31 et 32 du double fuselage bilobe sont établis pour pouvoir résister à toutes les contraintes statiques et dynamiques auxquelles ce fuselage peut être soumis dans les diverses situations possibles : au sol, au décollage, à l'atterrissage et en vol, notamment à haute altitude. C'est dans cette dernière situation que les contraintes sont les plus fortes du fait de la pressurisation de la cabine. Elles tendent à faire éclater le fuselage. Les autres contraintes proviennent notamment de la charge transportée et de la masse des structures elles-mêmes.

L'invention triomphe d'un préjugé en prévoyant dans un fuselage bilobe, de compenser les contraintes existant le long des lignes de jonction des deux lobes, en un nombre discret de points ceci correspondant aux poteaux 31. Il en résulte une grande facilité de circulation des passagers d'un côté à l'autre du fuselage.

La détermination des éléments structurels reliant les lignes de jonction 18 et 19 des deux lobes de la coque bilobe est effectuée en fonction des considérations suivantes :

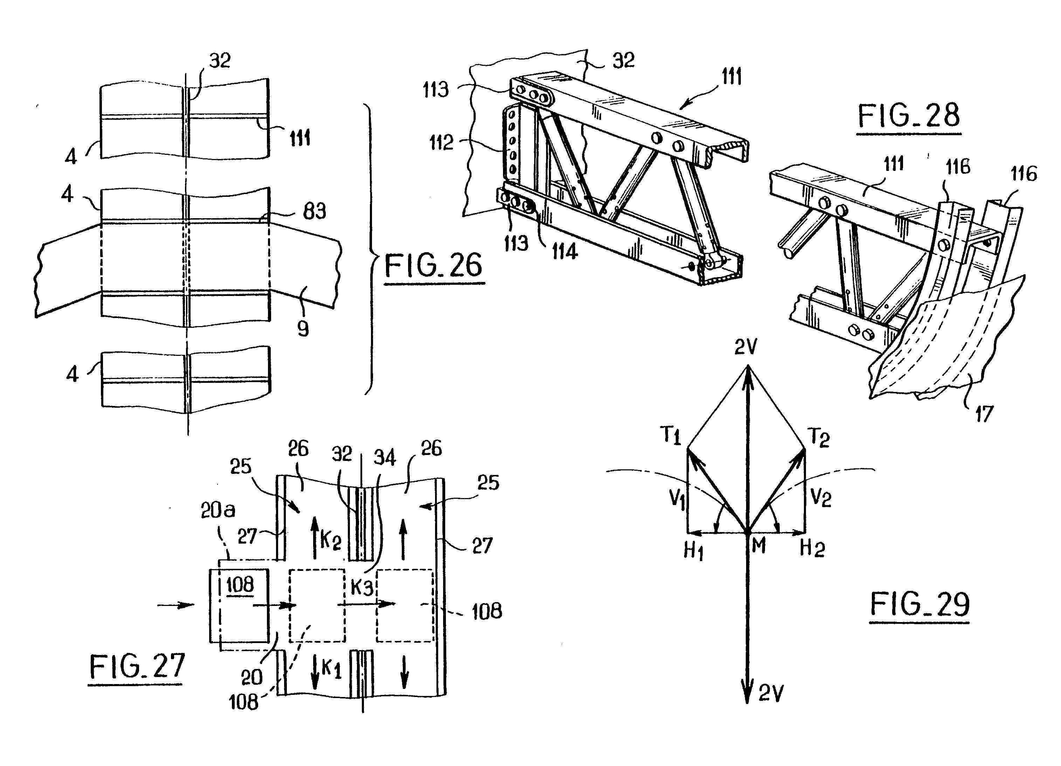

En ce qui concerne les contraintes liées à la pressurisation de la cabine, la figure 29 donne un diagramme simplifié des forces s'exerçant dans un plan transversal, au point de jonction M supérieur de deux lobes de section sensiblement circulaires. Les forces résultantes sont deux forces tangentielles T1, T2, pouvant se décomposer d'une part en deux composantes horizontales H1, H2, qui s'annulent, et d'autre part en deux composantes verticales V1, V2, qui s'ajoutent et qui doivent donc être compensées.

Pour atteindre ce but les éléments structurels précités, comprenant le poutrage supérieur 28, le poutrage inférieur 29 et les moyens de liaison entre eux, doivent remplir différentes fonctions.

Le poutrage supérieur 28 a d'abord comme fonction de compenser, en chaque point de la ligne de jonction supérieure, les forces (V1 + V2) schématisées figure 29 et provenant de la pressurisation. L'effort de compensation est transmis principalement par les poteaux 31 travaillant à la traction. Comme ces poteaux sont relativement éloignés les uns des autres, le poutrage supérieur 28 a également pour fonction de répartir l'effort de compensation le long de la ligne de jonction supérieure. En outre, le poutrage supérieur contribue à supporter le carénage supérieur 21 et éventuellement une passerelle de service non représentée dont il sera question plus loin.

Dans la région de la ligne de jonction inférieure 19 des deux lobes du corps bilobé 17, la compensation des forces de surpression se fait de façon analogue par l'intermédiaire de la membrure 32 formant poutre et du poutrage inférieur 29. La membrure 32 est solidaire du plancher 23, qu'elle supporte. Le plancher 23, qui comprend une poutre longitudinale centrale 35, est lui-même solidaire des poteaux 31. Pour réaliser cette compensation, la membrure 32 travaille à la traction.

Selon une autre particularité de l'invention, il est prévu d'adapter la membrure 32 et le poutrage inférieur 29 pour permettre, à l'intérieur de la soute 25, le passage des conteneurs chargés par une ouverture latérale 20 (figure 2B) obturée par une porte 20a, ce passage devant s'effectuer à travers la membrure 32. A cet effet, comme le montrent les figures 2B et 3, le poutrage inférieur 29 est interrompu dans la région de la membrure 32 en regard de l'ouverture 34 prévue pour le passage de conteneurs d'un lobe dans l'autre. En face de cette ouverture, les planchers de soute 26 sont reliés par un élément de plan horizontal 26a. Pour cela, on supprime les parties internes des deux parties du corps bilobé 17 proches de la ligne de jonction inférieure 19, avec suppression corrélative d'une portion du poutrage inférieur 29, comme on le voit sur la coupe de la figure 2B. Les efforts correspondants sont repris par un élément de poutre 36, formant quille, raccordé en biseau à ses deux extrémités 36a au poutrage 29 (voir figure 3).

L'ensemble ainsi constitué des poutres 29 et 36 assure une continuité dans la transmission des efforts, malgré la discontinuité créée par l'ouverture 34.

Selon un autre aspect de l'invention, il est prévu d'adapter l'écartement E des centres C des deux fuselages de section circulaire dont la jonction constitue la coque bilobe 17 suivant divers critères susceptibles d'être sélectivement privilégiés par le constructeur en fonction du cahier des charges à remplir.

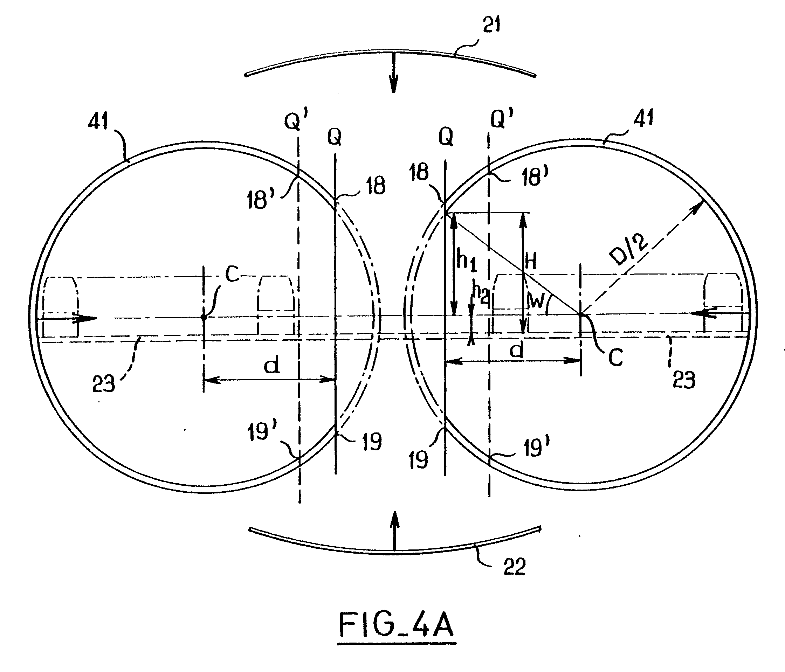

Plus particulièrement les schémas des figures 4 et 4A montrent comment, à partir de deux coques de fuselages cylindriques 41 de même diamètre D, on peut réaliser une coque de fuselage bilobé conforme à l'invention. Pour cela on coupe chaque fuselage à son intersection avec un plan Q parallèle à son axe, la distance $\overline{d}$ de l'axe au plan Q étant la même dans les $\overline{\text{deux}}$ cas. Puis on procède à l'assemblage des deux lobes selon leurs lignes de jonction supérieure et inférieure 18 et 19.

Les lignes décalées 18$'$, 19$'$ (Plans Q$'$) indiquent les marges de variation possibles de d pour s'adapter aux différentes utilisations $\overline{\text{prévues}}$ et cela en privilégiant certains paramètres structuraux.

En particulier, les choix suivants peuvent être réalisés, en fonction notamment du diamètre D de chaque lobe :
- Faire en sorte que la coupure ne supprime qu'une (G1 - Plan Q) ou deux (G1 + G2 - Plan Q$'$) files de fauteuils, sans création de volume inutile.
- Faire en sorte que la coupure corresponde au gabarit normalisé d'un conteneur 40, c'est-à-dire qu'aux jeux nécessaires près la paroi verticale 40a de celui-ci se trouve dans le plan Q (figure 4).
- Prévoir, dans un souci d'emploi de structure de coques existantes pour des avions monolobes, que le plan Q corresponde au lisse 42 sur lequel se fait normalement le retour de la tôle extérieure 39 de la coque d'un avion monolobe (figure 4).

La possibilité d'utilisation de structures incomplètes de coques cylindriques pré-existantes constitue un avantage essentiel de l'invention, car cela évite de réaliser un nombre très important d'études et de pièces d'outillage nouvelles.

L'écartement E des centres C, qui est égal à 2 d , conditionne aussi en partie, conjointement avec $\overline{\text{la}}$ position du plancher 23 par rapport au plan C-C la hauteur H de passage d'un lobe à l'autre dans la cabine 24. Cette hauteur H est égale à (h1 + h2) ou h1 désigne $\frac{1}{2}$ D sin W, où W désigne l'angle au centre de l'ouverture prévue dans la coque, et h2 la hauteur du plancher 23 par rapport au plan C-C.

Or il est nécessaire pour tirer le meilleur parti de l'invention, que H soit au moins égal à une hauteur d'homme moyenne, soit entre 1,80 et 2 m, h2 étant en général différent de zéro.

Par ailleurs, dans le cadre d'un avion gros porteur, le diamètre D de chaque fuselage cylindrique 41 peut être choisi avantageusement entre 5 m et 6 m.

Compte tenu de la valeur des paramètres ci-dessus, on a intérêt à accroître l'écartement E des axes C des deux lobes pour améliorer la portance du fuselage.

De préférence, la dimension transversale totale d'un corps bilobe sera choisie comprise entre 1,5 et 1,8 D. Par exemple, si D = 5,5 m, le corps bilobe aura de préférence une dimension transversale totale comprise entre 8,25 m et 9,9 m.

Une fois les deux lobes assemblés, on met en place les carénages 21 et 22 en les fixant sur la coque du fuselage bilobe comme on le verra plus loin. Le volume fK (figures 2A, 2B) compris entre la coque 17 et le carénage 21 ou 22 n'est pas pressurisé, mais constitue seulement un espace confiné.

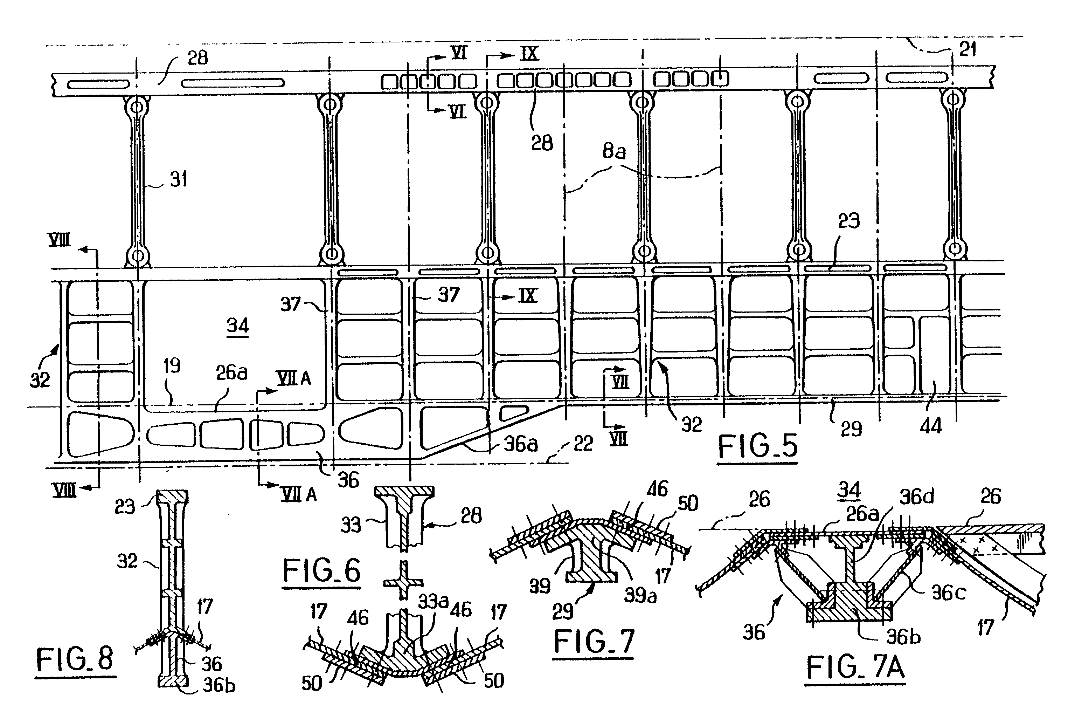

Une réalisation particulière plus détaillée de la structure du fuselage selon l'invention dans le plan de symétrie, où se fait le raccordement des deux coques 41 pour former le fuselage bilobé 17, est représentée aux figures 5 à 10.

Le poutrage supérieur 28, coiffé par le carénage schématisé en 21, est constitué principalement par une poutre à nervures 33 (figure 6) formant à sa partie inférieure une semelle en V, 33a, sur les ailes de laquelle sont fixées, par l'intermédiaire de goussets de renforcement 50, les extrémités 46 des parois de chaque lobe. La fixation est assurée par tous moyens usuels en construction aéronautique (rivetage, boulonnage etc...).

La structure des poutrages 28 et 29 varie en fonction des modifications de structure apportées à la membrure 32 qui est constituée ici par une poutre à croisillons mais qui présente diverses discontinuités facilitant les manutentions dans la soute 25. En particulier il est prévu, en regard de la porte de soute 20, une grande ouverture 34 pour le passage des conteneurs d'un lobe dans l'autre, et une ouverture 44 pour le passage du personnel de service.

Le poutrage supérieur 28 est renforcé à l'aplomb de ces ouvertures.

La membrure 32 fait corps (figure 7) avec le poutrage inférieur 29 placé au-dessous de la ligne 19 de jonction des lobes.

La figure 7A montre comment on réalise dans la région de l'ouverture pour conteneurs 34 une continuité de niveau entre les deux planchers inférieures 26 (un seul est représenté) pour le passage du fret d'un lobe dans l'autre. On voit en particulier la structure à section triangulée de la poutre surbaissée 36 qui comporte une quille 36b et deux ailes 36c concourant à la fixation des panneaux médians de la coque 17. L'âme 36d de la poutre 36 supporte l'élément de plan 26a, situé au-dessous de la ligne de jonction 19, qui assure la continuité des planchers de soute 26.

La poutre 36 qui s'étend sensiblement au-delà de l'ouverture 34 est en forme de trapèze isocèle, ses extrémités triangulaires 36a venant se raccorder en biseau au poutrage inférieur 29. Le raccordement est effectué de façon à éviter toute discontinuité ou noeud dans la répartition des contraintes.

On a encore schématisé sur la figure 5 en traits mixtes les emplacements des extrémités 8a des arceaux de forme bilobée dont la succession et l'assemblage constitue la coque 17. On voit que les extrémités de ces arceaux ont un pas égal à celui des montants 37.

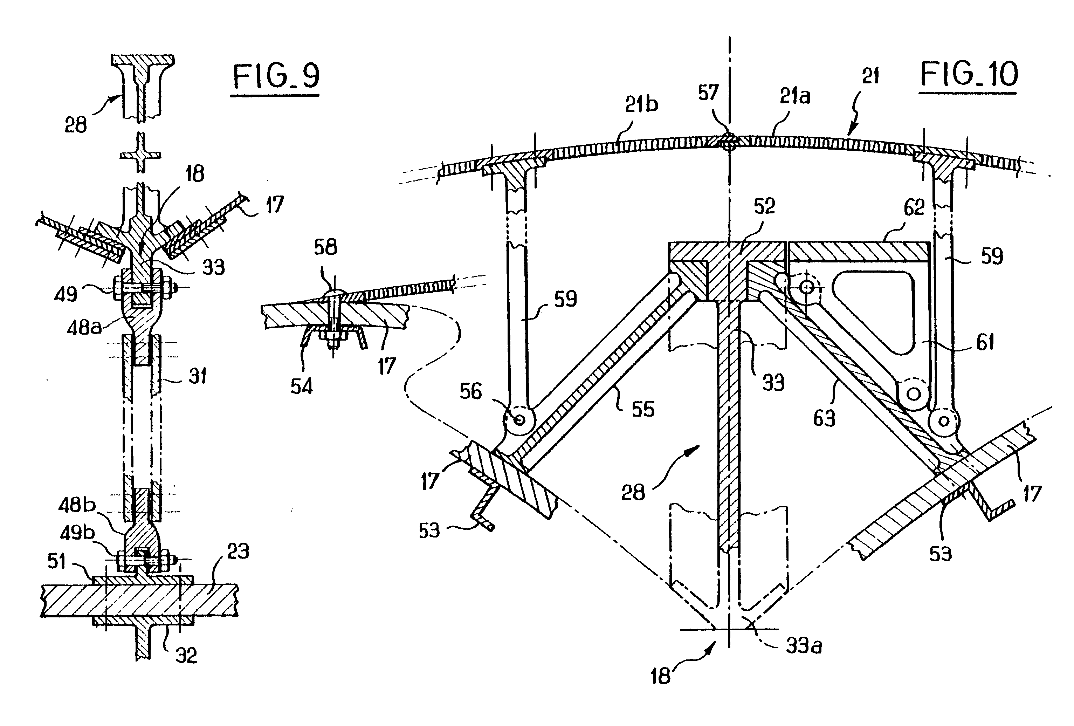

La figure 9 montre comment est effectuée la liaison du poutrage supérieur 28 à un poteau tubulaire 31 au moyen d'une chape 48a qui enserre l'âme 33 de ce poutrage et y est fixée par des boulons 49. La chape 48a est elle-même reliée à l'extrémité supérieure du poteau 31 au moyen de boulons non représentés. A sa partie inférieure, le poteau 31 est en outre relié au plancher de cabine 23 par une deuxième chape 48b qui est engagée sur une plaque en T 51 et fixée par des boulons 49b. La plaque 51 est rendue solidaire du plancher 23 par des boulons non représentés, reliés à la partie supérieure de la membrure 32. on voit qu'ainsi est assurée une liaison continue avec répartition des efforts entre les poutrages 28 et 29.

La figure 10 montre comment peuvent être assemblées la poutre supérieure 28, la coque de fuselage 17 et le carénage supérieur 21.

Dans cet exemple, on prévoit pour la coque 17, outre sa liaison avec la semelle 33a de l'âme 33 (voir figures 6 et 10), une liaison supplémentaire triangulée entre une assise haute 52 en forme de T de l'âme 33 et la partie de la coque 17 proche d'un longeron longitudinal ou lisse 53. A cet effet il est prévu des jambes de force 55, 63, montées obliquement et s'appuyant d'une part contre l'assise 52 du poutrage 28 et à l'autre extrémité, contre la coque 17 et le lisse 53. La fixation de la jambe de force 55 est réalisée par des boulons non représentés.

Le carénage 21 est de préférence constitué d'une succession de panneaux galbés 21a, 21b, assemblés par des rivets 57 dans le plan de symétrie vertical de l'avion.

Le carénage 21 est raccordé tangentiellement à chaque lobe de la coque 17, le long d'un lisse 54, au moyen de boulons 58. En outre, le carénage 21 st supporté par des montants 59 auxquels il est relié par des fixations non représentées. Chaque montant 59 est lui-même fixé à son extrémité inférieure 56 à une jambe de force 55 ou 63.

Des supports de section triangulaire 61 peuvent être fixés sur les jambes de force 55 ou 63, ces supports 61 comportant un élément de plateforme 62 dans le prolongemnt de l'assise 52 du poutrage 28. La surface de support ainsi constituée est utilisable de diverses manières et éventuellement pour fournir les points d'appui nécessaires pour l'installation d'une passerelle de service.

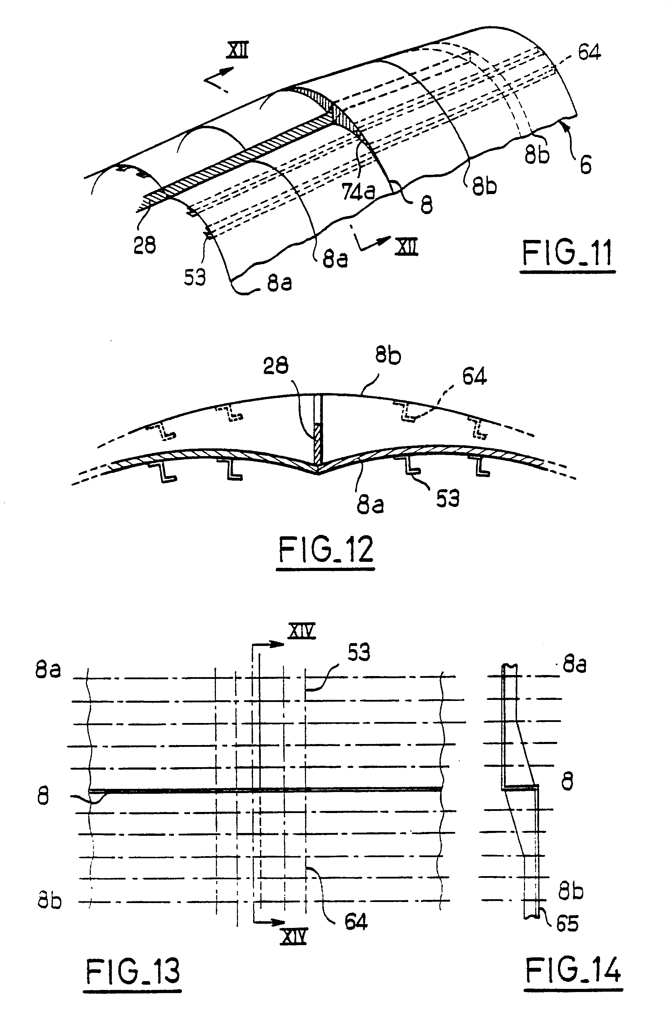

Sur les figure 11 à 14, on a montré schématiquement, à titre d'exemple, comment on peut adapter la structure du poutrage supérieur 28 et les structures connexes dans la zone de transition arrière, proche de la queue 6 (voir figure 1) où les dimensions du fuselage se réduisent et où l'on passe d'une structure de fuselage bilobe à une structure monolobe de section ovale.

Si l'on se situe par rapport à la section 8, la structure du fuselage comprend, vers l'avant de l'avion, une succession d'arceaux de forme bilobée d'extrémités 8a, et vers l'arrière, une succession d'arceaux de forme ovale d'extrémités 8b. Les dimensions de ces derniers, selon une direction transversale horizontale, sont réduites par rapport à celles des arceaux bilobés.

Au niveau du raccordement 8 des arceaux des deux types, on réalise une petite discontinuité dimensionnelle ainsi que cela apparaît sur la figure 14, où le trait double 65 représente la limite de pressurisation à l'intérieur du fuselage. La petite portion de trait double, située au niveau de 8, sur la figure 14, correspond en quelque sorte, à une petite partie de cloison de pressurisation 74a, visible figure 11, et contreventée par des épanouissements 33a de l'âme 33. Sur la figure 12 sont également représentés des lisses 64 proches du poutrage 28, et situés dans le prolongmeent des lisses 53.

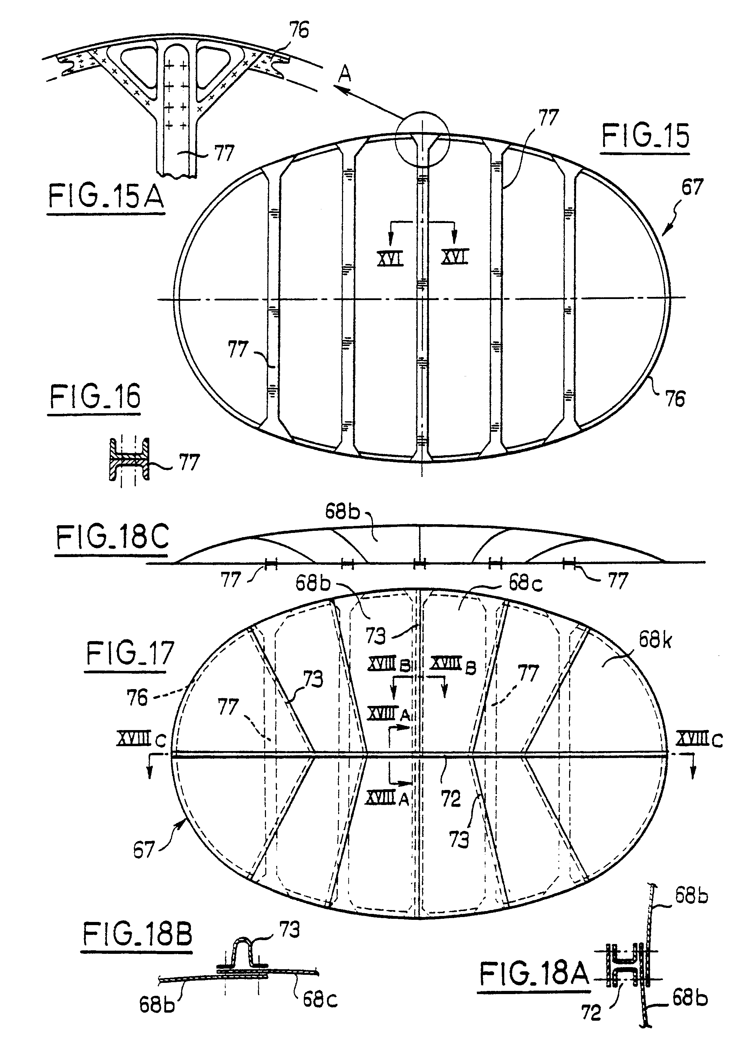

Les figures 15 à 18C montrent comment peut être réalisée une cloison de pressurisation 67 en forme de dôme pour être montée dans un fuselage conforme à l'invention, par exemple à l'arrière, pour constituer la cloison 15 de la figure 1.

La cloison bombée 67 est constituée par l'assemblage à recouvrement de plusieurs panneaux 68 tels que 68a, 68b.... 68k. Les panneaux 68 sont fixés les uns aux autres grâce à un longeron courbe 72 (Figure 18A) et à des raidisseurs courbes 73 (figure 18).

La cloison 67 est fixée à une armature (figure 15) composée d'un arceau périphérique de forme ovale 76 et de montants 77.

Cette structure de cloison de pressurisation est très résistante et peut être réalisée selon tout contour à la demande pour s'adapter au fuselage. On peut ainsi équiper les cloisons avant 14 et arrière 15 de la figure 1.

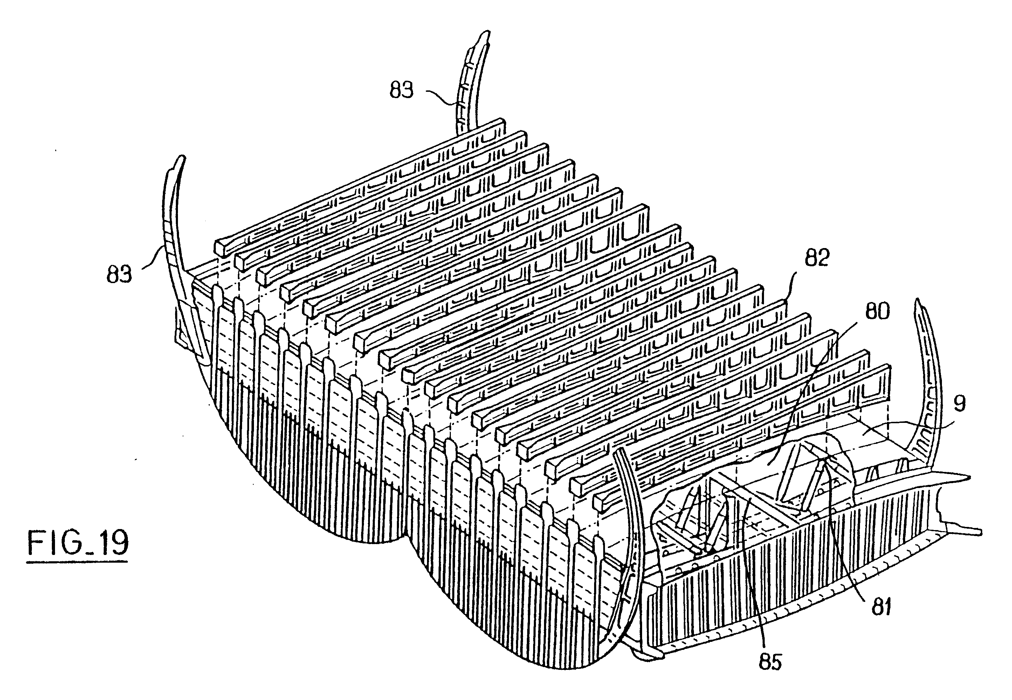

Dans le fuselage conforme à l'invention, il est prévu que la partie centrale de la voilure 9 qui traverse le fuselage bilobé et forme, dans le volume inférieur de ce fuselage, un caisson central de voilure, constitue la limite d'un réservoir cellulaire 80 de carburant lequel présentera ainsi une capacité accrue. Une telle structure est détaillée à la figure 19. Elle comprend une succession de poutrelles en treillis transversales 81 s'appuyant sur des contreventements 83 qui sont intégrés dans la structure du tronçon central 4 du fuselage bilobe 1, et de façon plus précise font partie des arceaux bilobés 8 précédemment définis.

A travers l'arrachement de la paroi supérieure de la voilure 9, on peut voir également la maîtresse poutre 85 de la voilure 9 qui traverse le réservoir 80 dans sa partie médiane.

La paroi supérieure de la voilure 9 supporte des entretoises 82 sur lesquelles on peut fixer le plancher de cabine non représenté sur la figure 19.

En raison de la largeur accrue de la partie centrale encastrée de la voilure 9, on obtient un réservoir de très grande capacité représentant, selon la valeur de E, de 1,5 à 1,9 fois le volume du réservoir correspondant d'un avion monolobe de diamètre D, ce qui accroît considérablement le rayon d'action de l'avion à fuselage bilobe conforme à l'invention.

En outre, on peut ainsi accroître l'efficacité des mouvements de carburant entre deux réservoirs de l'avion, mouvements destinés à modifier, au cours d'un vol, la position du centre de gravité de l'avion en vue d'une réduction de la traînée et d'une économie de carburant.

L'un des principaux avantages que présente un fuselage bilobé conforme à l'invention par rapport à un fuselage bilobé connu antérieurement comportant une cloison séparatrice médiane est de permettre une très forte augmentation de la facilité de circulation d'un côté à l'autre de l'avion, et par conséquent une nette amélioration du mouvement des passagers lors des embarquements ou débarquements, ou en vol. De plus, ceci offre des possibilités d'évacuation dans certaines situations critiques où l'évacuation de l'avion ne peut se faire que d'un côté .

Selon un autre aspect de l'invention, on a mis à profit les considérations suivantes :

La possibilité de circuler transversalement dans un fuselage bilobé comportant des poteaux de liaison 31 dans le plan médian longitudinal dépend principalement des paramètres suivants :

- densité des poteaux, c'est-à-dire pas J des poteaux, mesuré par exemple par rapport au pas des arceaux bilobés faisant partie de la structure transversale du fuselage ;

- pas P des rangées de sièges, ce pas dépendant principalement de la catégorie de sièges (sièges de classe économique, de classe affaires, de première classe), le pas P étant, en règle générale, différent du pas J.

Bien entendu, le diamètre des poteaux intervient aussi, mais sa variation étant faible, on peut le considérer comme une constante. On peut indiquer comme ordre de grandeur un diamètre de 5 centimètres.

On peut apprécier la facilité de circulation transversale dans le fuselage bilobé en définissant une fraction L représentant le pourcentage moyen de blocage, c'est-à-dire le pourcentage moyen de chemin transversal perdu par rapport au chemin qui serait disponible si les poteaux n'existaient pas. L est une fonction linéaire du pas J des poteaux et du pas P des rangées de sièges.

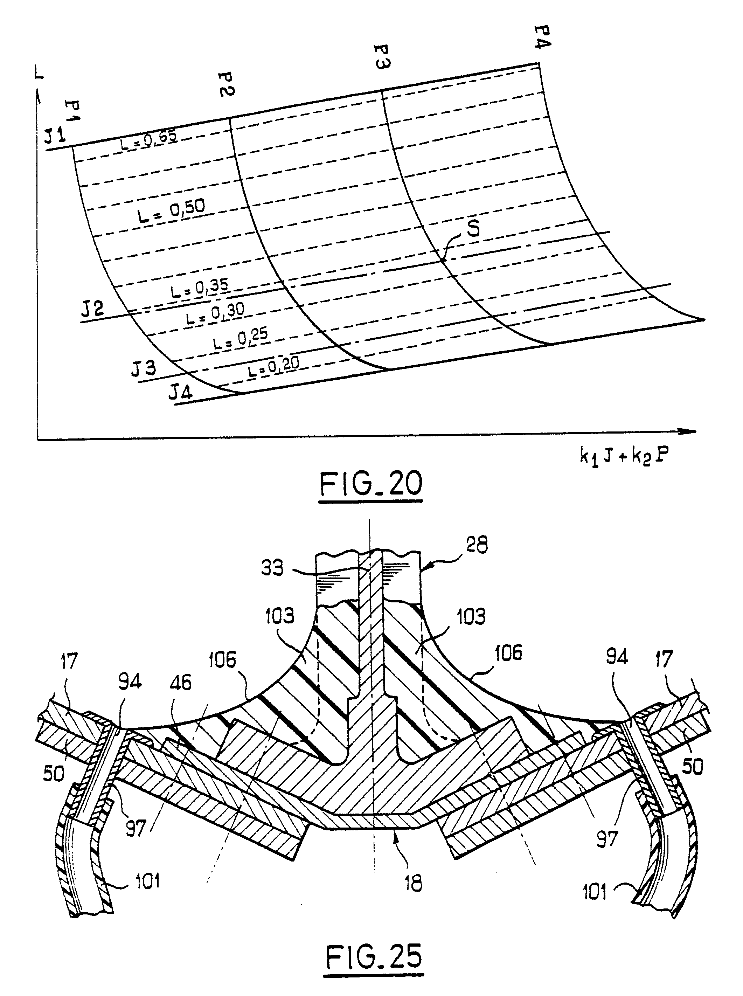

Le diagramme de la figure 20 a été tracé dans un système de coordonnées comprenant en abscisses les valeurs de k1 J + k2 J et en ordonnées les valeurs de L (k1 et k2 sont des constantes numériques).

Le diagramme comprend plusieurs familles de courbes :
- des droites parallèles en pointillés correspondant à des valeurs constantes du coefficient moyen de blocage L, allant de L = 0,20 à L = 0,65 ;
- des droites parallèles J1, J2, J3, J4, légèrement inclinées par rapport aux précédentes, correspondant à des valeurs constantes du pas J des poteaux, avec :
. J1 = 1 x pas des arceaux bilobés
. J2 = 2 x J1
. J3 = 3 x J1
. J4 = 4 x J1 ;
- des courbes P1, P2, P3, P4 correspondant à des valeurs constantes du pas P des rangées de sièges, avec :
. P1 = 28 pouces, soit 71 cm
. P2 = 32 pouces, soit 81 cm (pas de la classe économique)
. P3 = 36 pouces, soit 91 cm (pas de la classe affaires)
. P4 = 40 pouces, soit 101 cm (pas de la première classe).

Ce diagramme montre que :
- le pourcentage moyen de blocage dépend assez peu des catégories de sièges (P1 à P4) puisque les droites L et J sont presque parallèles ;
- dès que le pas J des poteaux atteint deux fois le pas des arceaux bilobés (droite J2), le coefficient de blocage n'est plus que de 1/3, c'est-à-dire que les 2/3 de l'espace maximum pour un déplacement transversal restent libres.

L'invention vise notamment un agencement de poteaux de liaison et leur disposition par rapport aux rangées de sièges, qui soient organisés de telle façon que, pour une circulation transversale, on ait une perte de chemin transversal qui soit inférieure à la moitié du chemin transversal qui serait disponible si les poteaux n'existaient pas.

Sur la figure 20, cela correspondrait à la zone du diagramme située au-dessous de la droite en pointillés L = 0,50.

Toutefois les coefficients de blocage tirés du diagramme ci-dessus donnent seulement une indication valable dans le cas général mais ne s'appliquant pas à certaines combinaisons spécifiques.

Par exemple, si l'on a :
- pas des rangées de sièges, P = 101 cm (ce qui correspond à la courbe P4)
- pas des arceaux bilobés = 50,5 cm
- pas des poteaux, J = 2 x pas des arceaux (ce qui correspond à la droite J2).

Il en résulte : J = 101 cm = P.

Autrement dit, si l'on prend un point de départ convenable, c'est-à-dire en regard du dossier des sièges, on peut placer les poteaux de telle manière qu'il n'y ait jamais de blocage.

Mais une situation exceptionnelle de ce genre ne peut pas s'appliquer complètement dans un avion qui présente plusieurs catégories de sièges et par conséquent plusieurs pas distincts pour les rangées de sièges.

Ainsi si l'avion comporte également une catégorie de sièges de pas P3, le pas des poteaux J2 étant égal à celui des sièges P4 sera nécessairement différent de celui des sièges P3, dans l'hypothèse où le pas des arceaux est lui-même constant. Dans ce cas, l'intersection S de J2 et de P3 fournit le coefficient de blocage de P3 qui est compris entre 0,30 et 0,35 comme on le voit sur l'abaque de la figure 20.

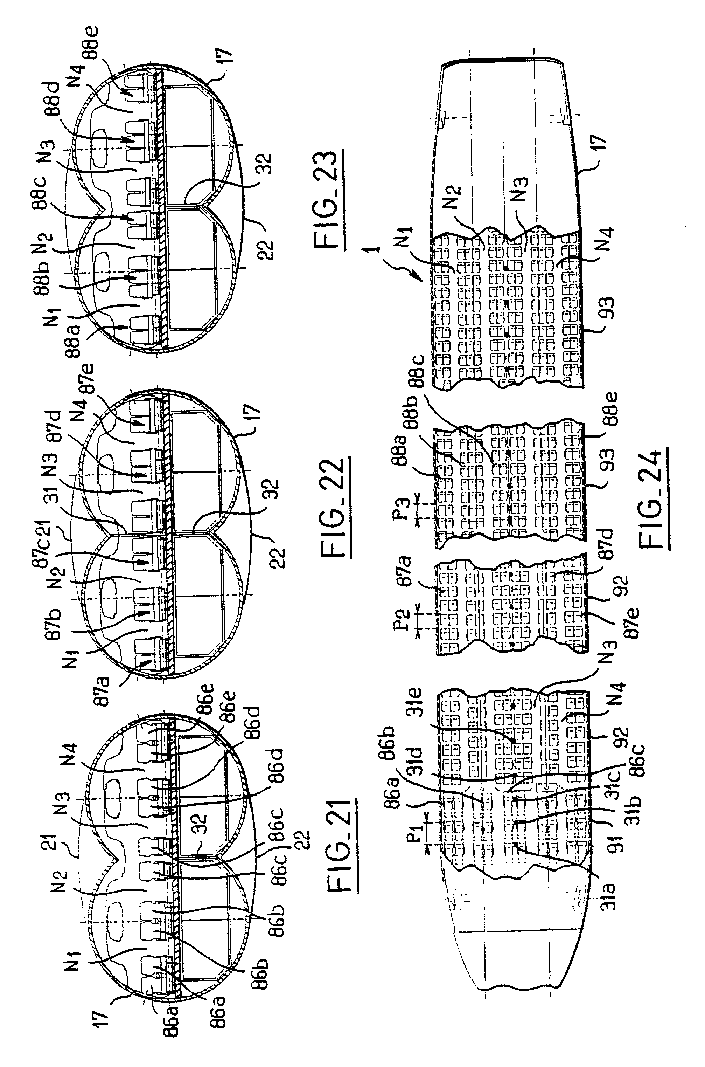

A titre d'exemple, dans l'agencement de la figure 24, les poteaux 31a, 31b, 31c, 31d ne font pas blocage, alors que le poteau 31e fait blocage.

De toute façon, le coefficient de blocage du fuselage conforme à l'invention est nettement inférieur aux coefficients de blocage des fuselages bilobes connus, notamment ceux des fuselages des deux brevets précités : US 3 405 893 (FLAMAND), US 4 674 712 (WHITENER), dans lesquels, si l'on se réfère aux figures 1 et 9 de FLAMAND ou à la figure 5 de WHITENER, on voit que le coefficient de blocage est d'environ 0,80.

Les deux fuselages précités présentent une autre caractéristique défavorable, à savoir que l'espace disponible pour le passage transversal est concentré en deux ou trois localisations, alors que dans le fuselage de l'invention, l'espace disponible est réparti tout le long du plan médian longitudinal.

Cette dernière disposition est très avantageuse, non seulement pour le confort des passagers, mais aussi et surtout dans certaines situations critiques d'évacuation par un seul côté de l'avion, pour lesquelles la limitation du nombre de zones de passage peut provoquer des mouvements de panique, qui eux-mêmes peuvent augmenter le temps nécessaire pour l'évacuation.

On peut ajouter que les règlements actuels de navigabilité aéronautique, notamment aux Etats-Unis et en Europe, en matière d'évacuation d'urgence des passagers, exigent notamment :
- que les avions offrent la possibilité de faire sortir la totalité des passagers par les portes situées de l'un des deux côtés de l'avion, bien que des portes doivent être installées des deux côtés ;
- que tous les passagers doivent être placés, par rapport aux portes de sortie, dans des conditions de proximité appropriées aux situations d'urgence.

On peut considérer, vis-à-vis de la certification de navigabilité aéronautique, que les obligations ci-dessus sont bien remplies par un avion à fuselage bilobé conforme à l'invention, mais qu'elles ne le sont pas par les avions antérieurs précités et que de ce fait leur certification ne pourrait pas être obtenue.

Le fuselage bilobé conforme à l'invention offre diverses possibilités d'agencement de sièges comprenant, comme montré aux figures 21 à 24, pour chaque rangée transversale, cinq groupes de sièges séparés par quatre allées de circulation longitudinales N1, N2, N3, N4.

Trois zones de sièges (voir figure 24) repérées par 91, 92, 93, correspondent respectivement à la première classe, à la classe affaires et à la classe économique.

L'agencement transversal prévu pour la zone de première classe est montré à la figure 21. Dix sièges 86 sont disposés de front et répartis en cinq groupes de deux sièges, repérés de gauche à droite par les lettres a, b, c, d, e, respectivement. Dans la zone centrale, les deux sièges 86c, symétriques par rapport au plan médian, sont légèrement écartés pour permettre, le cas échéant, le passage d'un poteau de liaison 31.

Dans chaque lobe, la partie médiane comprend une paire de sièges, 86b - 86b ou 86d - 86d.

La figure 22 montre l'agencement de la zone de la classe affaires. Douze sièges 87 sont disposés de front et répartis en cinq groupes repérés également par les lettres a, b, c, d, e. A la différence de la première classe, le groupe central comprend quatre sièges 87c, répartis en deux paires, légèrement écartées pour le passage du poteau 31.

La figure 23 montre l'agencement de la classe économique. Quatorze sièges 88 sont disposés de front, répartis en cinq groupes a, b, c, d, e. A la différence de la classe affaires, le groupe médian 88b, 88d de chaque lobe comprend trois sièges jointifs 88b ou 88d, au lieu de deux sièges jointifs 87b ou 87d. La région centrale 88c comporte toujours quatre sièges.

A la figure 25, on a montré un mode de réalisation du poutrage supérieur 28 (voir figures 5 et 6) comportant un dispositif de drainage de l'eau pouvant s'accumuler sous le carénage 21, dans une partie basse de la région supérieure de la coque, au voisinage de la ligne de jonction 18 des deux lobes.

La nécessité de ce drainage provient également du fait que l'espace compris entre le carénage 21 et la coque 17 n'est pas pressurisé. Bien que n'étant pas en communication directe avec l'extérieur, il peut faire l'objet d'infiltrations ou de condensations.

Deux orifices 94, sont pratiqués de part et d'autre de la poutre 28 à travers une partie de la coque de fuselage 17 proche du plan médian et du gousset de renforcement correspondant 50. Des embouts 97 sont montés de façon étanche dans les orifices 94 et sont emmanchés dans des tuyaux d'évacuation 101.

Le dispositif est complété par un matériau de remplissage et d'étanchéité 103 que l'on place de chaque côté de l'âme 33, en lui donnant des profils 106 adaptés à une bonne évacuation de l'eau de façon en particulier que les orifices 94 soient aux points bas. Les tuyaux 101 sont reliés à une pompe d'évacuation non représentée.

La figure 26 est un schéma montrant comment la charge emportée par l'avion est transmise à la voilure 9.

La membrure longitudinale médiane 32 supporte la charge du plancher de cabine 23 (poids des passagers, des sièges, des offices, ...) et du plancher inférieur 26 (poids du fret, des bagages, ...). A son tour la membrure 32 est supportée par des poutres transversales 111 (voir figure 28) qui transfèrent la charge à la coque 17 du fuselage et de là à la voilure 9 par l'intermédiaire des contreventements 83 (voir figure 19).

La facilité de chargement et de déchargement de la double soute 25 est mise en évidence par la figure 27 qui montre schématiquement la circulation d'un conteneur 108 dans la soute de l'avion. Le conteneur est introduit dans la première partie de la soute par l'ouverture 20 après ouverture de la porte latérale 20a de l'avion. On peut alors le déplacer vers l'avant (flèche K1) ou l'arrière (flèche K2) dans cette première partie de la soute. On peut le faire passer facilement dans la deuxième partie de la soute par l'ouverture 34, (flèche K3), puisqu'au niveau de cette ouveture le plancher de soute 26 est un plancher continu (voir figure 7A).

La poutre 111 est une poutre en treillis fixée à la membrure 32 au moyen d'éléments intermédiaires 112, 113, et de boulons 114. Vers la paroi extérieure, la poutre 111 est boulonnée sur des armatures d'arceaux ou cadres 116, eux-mêmes fixés par des boulons non représentés sur la coque 17.

Il apparaît ainsi que le fuselage à double coque bilobée conforme à l'invention peut être réalisé de façon économique et fiable, en tirant un parti maximum de structures de coques monolobes préexistantes.

En outre, un tel fuselage bilobe présente de nombreux avantages remarquables tant à la fabrication qu'en période d'exploitation.

Ainsi, le grand volume de soute assuré par le fuselage bilobe conforme à l'invention permet d'utiliser en partie celui-ci pour d'autres fonctions que le transport du fret. Par exemple, on peut prévoir la mise en place de toilettes, d'offices ou de cuisines, voire de cabines, de salons ou de bars, l'accès à ces espaces spécialisés pouvant être assuré, à partir du plancher de cabine, par un ou des escaliers intérieurs ou encore par un ou des ascenseurs.

Bien entendu, l'invention n'est pas limitée aux exemples de réalisation que l'on vient de décrire, et on peut leur apporter de nombreuses modifications sans sortir du cadre de cette invention.

## Revendications

1. Fuselage d'avion (1), dont la majeure partie et en particulier la partie centrale comprend une coque bilobée (17) dans le sens latéral, c'est-à-dire comportant deux lobes disposés côte à côte, assemblés selon deux lignes de jonction longitudinales (18, 19), respectivement supérieure et inférieure, caractérisé en ce qu'il comprend :
- un poutrage supérieur de renforcement (28) de la ligne de jonction supérieure (18) ; ·
- un plancher (23) séparant un volume supérieur utilisable comme cabine (24) et un volume inférieur à usage multiple (25) notamment de soute pour le fret ;
- des moyens (32) pour supporter le plancher de cabine ces moyens reliant ledit plancher à la partie inférieure du fuselage ;
- des rangées de sièges agencées dans le volume de cabine et pouvant s'étendre sensiblement d'un côté à l'autre du corps bilobé ;
- un poutrage inférieur de renforcement (29) le long de la ligne d'intersection inférieure (19);
- et des moyens de liaison espacés (31), répartis dans les rangées de sièges, reliant le poutrage supérieur (28) à des éléments de structure situés dans la région inférieure du fuselage (32, 29).

2. Fuselage conforme à la revendication 1, caractérisé en ce qu'il comprend un deuxième plancher (26) utilisable notamment pour le fret, disposé dans la partie inférieure du fuselage.

3. Fuselage conforme à l'une des revendications 1 ou 2, caractérisé en ce que le poutrage supérieur (28) est disposé au-dessus de la ligne de jonction supérieure (18) des deux lobes de la coque (17).

4. Fuselage conforme à l'une des revendications 1 à 3, caractérisé en ce que le poutrage inférieur de renforcement (29) est disposé au-dessous de la ligne de jonction inférieure (19) des deux lobes de la coque (17).

5. Fuselage conforme à l'une des revendications 1 à 4, caractérisé en ce que les moyens de liaison espacés (31) relient le poutrage supérieur (28) au plancher de cabine (23).

6. Fuselage conforme à l'une des revendications 1 à 5, caractérisé en ce que le plancher de cabine (23) est disposé au-dessous du plan diamétral (U-U) joignant les axes longitudinaux des deux lobes de la coque (17).

7. Fuselage conforme à l'une des revendications 5 ou 6, caractérisé en ce que les moyens de liaison espacés sont des poteaux (31) situés dans le plan longitudinal médian du fuselage bilobé (1).

8. Fuselage conforme à l'une des revendications 1 à 7, caractérisé en ce que le plancher de cabine (23) est supporté longitudinalement dans sa partie médiane par une membrure (32), telle qu'une poutre en treillis ou à croisillons, cette membrure étant elle-même attachée au poutrage inférieur (29) au voisinage de la ligne inférieure de jonction (19) des deux lobes de la coque.

9. Fuselage conforme à l'une des revendications 2 à 8, dans lequel au moins une porte latérale (20a) est ménagée dans le fuselage pour l'accès à la soute (25), cette porte étant située du côté opposé à celles desservant la cabine, caractérisé en ce que le plancher de fret (26) est disposé au-dessous de la ligne de jonction inférieure des lobes (19) et est constitué par deux plateformes séparées au moins partiellement par une partie du poutrage inférieur de renforcement (29) et des moyens prévus pour supporter le plancher de cabine (23).

10. Fuselage conforme à la revendication 8, dans lequel au moins une porte latérale (20a) est ménagée dans le fuselage pour l'accès à la soute, cette porte étant située du côté opposé à celles desservant la cabine, caractérisée en ce qu'au moins une ouverture (34) est laissée libre dans les moyens (32) supportant le plancher de cabine (23) situés dans le plan médian du fuselage, le gabarit de cette ouverture étant compatible avec le passage de conteneurs (40), notamment des conteneurs normalisés utilisés en transport aéronautique.

11. Fuselage conforme à l'une des revendications 8 ou 10, caractérisé en ce que le poutrage de renforcement inférieur (19) est surbaissé (36) pour permettre le raccordement des deux planchers de soute (26) de manière à réaliser une surface d'appui sensiblement plane (26a), à travers l'ouverture (34) laissée libre dans les moyens (32) supportant le plancher de cabine (23).

12. Fuselage conforme à la revendication 11, caractérisé en ce que le poutrage de renforcement surbaissé (36) en regard de l'ouverture de passage (34) des conteneurs est relié au reste du poutrage inférieur de renforcement (29) de part et d'autre de cette ouverture par des éléments de transition (36a) assurant une continuité dans la répartition des charges sur le poutrage inférieur de renforcement (29).

13. Fuselage conforme à la revendication 8, caractérisé en ce que la membrure (32) supporte la charge du plancher de cabine (23) et du plancher (26) et en ce que cette charge est transférée à la coque (17) du fuselage par des poutres transversales (111) puis à la voilure (9) de l'avion par l'intermédiaire de contreventements (83).

14. Fuselage conforme à l'une des revendications 1 à 13, caractérisé en ce que le plan de coupure (Q) de chaque lobe (17) est à une distance (d) de son axe, qui est inférieure au rayon de la section de ce lobe d'une valeur faiblement supérieure à l'encombrement transversal d'un siège.

15. Fuselage conforme à l'une des revendications 1 à 14, caractérisé en ce que le plan de coupure (Q) de chaque lobe (17) définit au moins une ligne de jonction (18, 19) correspondant à un lisse (42) faisant partie de la structure périphérique d'un lobe de la coque (17).

16. Fuselage conforme à l'une des revendications 1 à 15, caractérisé en ce qu'il comprend une cloison de pressurisation à l'arrière (67), de façon à permettre l'obtention d'une atmosphère pressurisée au cours d'un vol en altitude.

17. Fuselage conforme à l'une des revendications 7 à 16, caractérisé en ce que le pas des poteaux (31) reliant le poutrage supérieur (28) au plancher de cabine (23) est un multiple compris entre 1 et 4 du pas des arceaux formant le fuselage.

18. Fuselage conforme à l'une des revendications 1 à 17, caractérisé en ce que le volume inférieur (25) du corps bilobé est traversé par la voilure (9) dont le caisson central, situé dans le volume inférieur, constitue la limite d'un réservoir cellulaire de grande capacité (80) pour le carburant de l'avion.

19. Fuselage conforme à l'une des revendications 1 à 18, caractérisé en ce que la largeur d'une section transversale du corps bilobé est sensiblement comprise entre 1,5 et 1,8 D, où D désigne le diamètre de chaque lobe, le diamètre D étant avantageusement compris entre 5 et 6 m.

20. Fuselage conforme à l'une des revendications 1 à 19, caractérisé en ce que le pas des poteaux (31) est déterminé par rapport à l'écartement des rangées de sièges (86, 87, 88) de façon que la majorité desdits poteaux (31) soit située en regard des sièges de manière à dégager au maximum la libre circulation latérale entre les rangées de sièges.

21. Fuselage conforme à l'une des revendications 1 à 20, caractérisé en ce que les rangées de sièges (86, 87, 88) sont disposées pour la majorité d'entre elles en alignement avec les poteaux de liaison (31) de manière à permettre une libre circulation latérale entre deux rangées de sièges, d'un côté à l'autre du fuselage.

22. Fuselage conforme à l'une des revendications 7 à 21, caractérisé en ce que l'agencement des poteaux de liaison (31) et leur dispossition par rapport aux rangées de sièges correspondent, pour une circulation transversale d'un lobe dans l'autre, à une perte inférieur à la moitié du chemin transversal qui serait disponible si les poteaux n'existaient pas.

23. Fuselage conforme à l'une des revendications 7 à 15, caractérisé en ce que l'agencement des sièges comprend, dans la zone proche du plan médian longitudinal, pour au moins une rangée de sièges, deux sièges voisins (86c, 87c, 88c), disposés symétriquement par rapport à ce plan longitudinal et présentant entre eux un écartement correspondant à l'encombrement transversal d'un poteau de liaison (31).

24. Fuselage conforme à l'une des revendications 1 à 23, caractérisé en ce que l'agencement des sièges comprend, pour chaque rangée de sièges s'étendant d'un côté à l'autre du corps bilobe, cinq groupes de sièges comportant chacun de deux à quatre sièges, et deux groupes de sièges voisins étant séparés par une allée (N1, N2, N3, N4).

25. Fuselage conforme à l'une des revendications 1 à 24, caractérisé en ce qu'il comprend deux à trois sièges jointifs dans la partie médiane de chaque lobe de la coque (17).

26. Fuselage conforme à l'une des revendications 1 à 25, caractérisé en ce que chaque rangée de sièges (86, 87, 88) s'étendant d'un côté à l'autre du corps bilobe comprend de 10 à 14 sièges selon la classe concernée.

27. Fuselage conforme à l'une des revendications 1 à 26, caractérisé en ce qu'il comprend au moins un carénage supérieur (21) et/ou inférieur (22) recouvrant respectivement les lignes de jonction supérieure (18) et/ou inférieure (19), et délimitant, avec respectivement une partie du fuselage proche de chacune des lignes d'intersection, un volume supérieur et/ou un volume inférieur (K) confinés mais non pressurisés.

28. Avion de grande capacité pour le transport de passagers et/ou de fret, caractérisé en ce qu'il comprend un fuselage conforme à l'une des revendications 1 à 27.

FIG.1

FIG.1A

FIG. 2A

FIG. 2B

FIG_3

FIG_4

FIG_4A

FIG_5

FIG_6

FIG_7

FIG_7A

FIG_8

FIG_9

FIG_10

28

18

17

33

49

48a

31

58

48b

49b

51

23

54

17

32

21b 57 21a 21

52

62

59

59

56

55

33

63

61

17

17

28

53

53

18

33a

EP 0 408 432 A1

XII

64

28

53

8a

8a

74a

8

8b

8b

6

FIG_11

28

8b

64

64

8a

53

FIG_12

XIV

53

8a

8a

8

8

8b

8b

64

65

XIV

FIG_13

FIG_14

FIG.15

FIG.15A

FIG.16

FIG.18C

FIG.17

FIG.18B

FIG.18A

FIG_19

## FIG. 20

## FIG. 25

FIG. 21

FIG. 22

FIG. 23

FIG. 24

FIG.28

FIG.29

FIG.26

FIG.27

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A, D | US-A-3405893 (FLAMAND)<br>* le document en entier * | 1, 6,<br>27, 28 | B64C1/00 |
| A, D | US-A-4674712 (WHITENER)<br>* colonne 3, ligne 23 - colonne 3, ligne 32 *<br>* colonne 4, ligne 14 - colonne 4, ligne 32 *<br>* colonne 4, ligne 65 - colonne 4, ligne 68 *<br>* colonne 5, ligne 1 - colonne 5, ligne 10;<br>figures 1-5 * | 1, 6, 28 | |
| A | DE-C-676459 (KAHLISCH)<br>* page 2, ligne 12 - page 2, ligne 21 *<br>* page 2, ligne 43 - page 2, ligne 74; figures<br>1, 2 * | 1, 5, 7 | |

| | DOMAINES TECHNIQUES RECHERCHES (Int. Cl.5) |
|---|---|
| | B64C |

Le présent rapport a été établi pour toutes les revendications

| Lieu de la recherche | Date d'achèvement de la recherche | Examinateur |
|---|---|---|
| LA HAYE | 03 OCTOBRE 1990 | ZERI A. |